(19) Europäisches Patentamt
European Patent Office
Office européen des brevets

(11) **EP 3 089 052 A1**

(12) **EUROPEAN PATENT APPLICATION**

(43) Date of publication:
**02.11.2016 Bulletin 2016/44**

(51) Int Cl.:
***G06F 17/30*** *(2006.01)*

(21) Application number: **15198305.3**

(22) Date of filing: **07.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.04.2015 GB 201507373**

(71) Applicant: **FUJITSU LIMITED**
**Kawasaki-shi,**
**Kanagawa 211-8588 (JP)**

(72) Inventors:
• **NOVACEK, Vit**
**Galway (IE)**
• **AL DARRA, Suad**
**Galway (IE)**
• **VANDENBUSSCHE, Pierre-Yves**
**Galway (IE)**

(74) Representative: **Wilding, Frances Ward**
**Haseltine Lake LLP**
**Lincoln House, 5th Floor**
**300 High Holborn**
**London WC1V 7JH (GB)**

(54) **A DISCOVERY INFORMATICS SYSTEM, METHOD AND COMPUTER PROGRAM**

(57)     A discovery informatics system is arranged to produce a graph based on a corpus of textual documents, the graph including documents in the corpus as nodes, with links between the nodes annotated by connecting concepts, the connecting concepts directly and indirectly connecting the documents. The system comprises: a contents interface arranged to download the document contents from the textual documents in the corpus; a preliminary processor arranged to extract a graph of concepts from the document contents, wherein nodes of the concept graph represent the concepts, which are entities in the documents and weighted edges between pairs of nodes are weighted relations between the entities, the weights representing the relative significance of particular relationships; a filter arranged to filter the weighted edges between the nodes to retain edges with higher weights providing candidate paths between all the concepts;

at least two scoring modules each arranged to score the candidate paths according to a scoring measure, wherein the measures model different aspects of the fitness of the paths for discovering facts within the corpus; an optimiser arranged to identify optimised paths of the concept graph that satisfy the scoring measures in an optimal manner; a document graph generator arranged to generate a graph of the documents in the corpus with concept-annotated links between them based on the optimised paths; and a graphical user interface, GUI, arranged to enable the user to view and navigate the document graph to discover facts within the corpus.

FIG. 2

**Description**

This invention relates to automated computation of links between textual documents in a corpus (or set of documents).

Invention embodiments aim to facilitate the process of discovering previously unknown complex facts entailed by the corpus, utilising implicit links between entities (or concepts) covered even by explicitly unrelated documents. This falls under the field of literature-based discovery, which refers to the use of papers and other academic publications to find new relationships between existing knowledge and was pioneered by D. R. Swanson. One development of this technique is Swanson linking - connecting two pieces of knowledge in isolated documents A and B using concepts from intermediate documents directly or indirectly related to A and B. A secondary area of related research and development is a broad and extensively studied sub-field of information retrieval that concerns discovery of links between documents using document similarity measures, or document clustering (grouping similar documents in a set together). Although this field is rather indirectly related to interactive-based discovery, its motivations are similar (i.e., to facilitate knowledge discovery from texts).

Despite the maturity of the document similarity/clustering field, there is still a lot of space for improvement of the state of the art. The existing solutions mostly focus on computing formal semantic representations of the particular documents and then define various metrics on the space of these representations, which are subsequently used for identifying similar pairs of documents or document clusters. Such solutions work efficiently in use cases requiring links between documents that share certain local features. However, there are use cases where a broader definition of document relatedness is needed. For example, imagine one needs to quickly make sense of a large body of documents in order to focus only on a limited set of interest. This is a very relevant use case nowadays when basically every knowledge worker is affected by information overload. One typical example is a graduate student who is picking a thesis topic and needs to process a large body of initially unfamiliar literature. Another example is an expert in a multidisciplinary field who often needs to quickly grasp basics of a discipline unrelated to his/her primary expertise.

In such cases, similarity-based document links or clusters are not that helpful on their own for several reasons. It is usually not known where to start in the corpus and therefore the link network should allow for exploration of most of its content no matter where one starts. Networks that have the so-called "small world property" (nodes can be reached from each other in a small number of steps) satisfy this requirement, but the document networks produced by classical methods are usually structured as a set of independent components. Consequently, following links computed by classical methods can easily result in being 'trapped' in a specific topic when browsing the document collection. Last but not least, in order to allow users to explore also the topics the domain is about and then focus on the relevant documents only, the document networks should allow for serendipitous browsing of the documents based on the topics in their content and not only the document-document links which is often the only type of information provided by the state of the art methods.

The field of literature-based discovery addresses most of the drawbacks of the approaches based on document similarity and clustering. In general, it studies implicit connections between concepts in isolated documents. The connections are computed using the document corpus as a whole, trying to find related intermediate concepts that could link the isolated ones. There have been many approaches. However, most of them are based on one (or more) of the following: natural language processing; machine learning; graph analysis and manual analysis. In addition to this classification, there are approaches that either use background knowledge (such as ontologies), or just the document data itself.

There is also a distinction between so-called "closed" and "open" modes of literature based discovery. Both of them are based on the 'ABC model' introduced in the seminal work by D. R. Swanson. In the open mode, one starts with a concept A and corresponding set of relevant documents $D_A$. In the articles, one looks for concepts B (intermediate concepts) that are associated with A. Consequently, articles relevant to the intermediate concepts $B$ are retrieved as a set $D_B$. In these articles, one looks for concepts $C$ that are associated with the $B$ concepts. Eventually, a set $D_C$ of documents relevant to the $C$ concepts is obtained. The candidate A-B-C paths are then ranked in order to trim their number to a feasible sub-set of possible discovery pathways. In the closed mode, the process is similar, however, the A and C concepts are fixed from the very beginning and only the intermediate concepts B are being identified.

It is desirable to provide a method and apparatus for discovery of the most informative semantically annotated links between textual documents.

In summary, invention embodiments concerns a method for finding relationships between documents via the concepts described by them. The inventors have re-thought the requirements for this task and structured them so that ideally the relationships should satisfy all of the following conditions to at least some degree:

A) The measure(s) for computing the links between documents and/or concepts within them have to go beyond mere co-occurrences or similarities, for example reflecting features of any of informativeness, coherence, surprisingness, complexity and rarity. These measures can effectively indicate the potential of relationships for making a discovery, however, their well-founded definition and synchronised optimisation is a non-trivial problem.

B) The links between documents need to explicitly reflect the content of the documents to support serendipitous exploration of the corpus. It is not enough just to connect the documents, the user has to be able to take the conceptual content of the documents into account in the context of making a discovery.

C) The links have to be computed using global measures derived from the whole corpus and not only from the particular document representations, as the particular documents cannot represent the knowledge implied by the whole domain fully and/or truthfully, which is an important aspect in the discovery informatics context.

D) The links have to support serendipitous exploration of the corpus, ideally no matter where one starts and navigates to, as the users need to be able to explore the corpus from any concept contained within it. This is an important condition for making discoveries about any topic implied by the corpus.

Embodiments of the invention can effectively enable:

1) Discovery of links between documents based on the global semantics of the document corpus and not the local representations of the documents themselves.
2) Simple explanation of the document links by chains of entity tags associated with them.
3) Exploratory navigation through the domain covered by the corpus from an arbitrary point, starting either from a document or from a concept of initial interest.

Below, we illustrate the two aspects of the problem using an illustrative example.

As mentioned before, most of the relevant available state of the art in document similarity and clustering compares representations of the isolated documents. Examples are probabilistic and vector space approaches used in various works dealing with document similarity measures defined on the content of documents or including domain knowledge from ontologies.

Such methods based on the document representations themselves may miss useful relationships, though, as demonstrated by the following example. Imagine two documents about neurological disorders:

- Document 1: Sathe K, Maetzler W, Lang JD, Mounsey RB, Fleckenstein C, Martin HL, Schulte C, Mustafa S, Synofzik M, Vukovic Z, Itohara S, Berg D, Teismann P. S100B is increased in Parkinson's disease and ablation protects against MPTP-induced toxicity through the RAGE and TNF-$\alpha$ pathway. In Brain. 2012 Nov;135(Pt 11):3336-47. Available at http://www.ncbi.nlm.nih.gov/pubmed/23169921.
- Document 2: Lane R, He Y, Morris C, Leverenz JB, Emre M, Ballard C. BuChE-K and APOE ep- silon4 allele frequencies in Lewy body dementias, and influence of genotype and hyperhomocysteine- mia on cognitive decline. In Movement Disorders. 2009 Feb 15;24(3):392-400. Available at http://www.ncbi.nlm.nih.gov/pubmed/19006190.

The documents can have these vector representations (computed by a basic TF-IDF (term frequency-inverse document frequency) scoring; using corresponding key-words as vector indices and omitting values of low significance):

- Document 1: 'protein': 2.773,'s100b':5.545
- Document2: 'apoe': 2.773,'pdd': 4.852,'dlb': 3.466

Classical similarity measures like cosine distance between the vectors will consider the two documents absolutely unrelated as there is no overlap in the characteristic vectors. However, if we process a whole corpus of articles related to neurological disorders (such as Parkinson's Disease), we can discover the following:

- There are terms that are important in the domain despite of being relatively unimportant in the context of the particular documents 1 and 2. For instance, 'tumor necrosis factor' and 'BuChe-K' in document 1 and 2, respectively.
- These two terms appear to be linked by a relevant path within a knowledge base of important domain concepts extracted from the corpus which suggests that the two documents may be related after all.

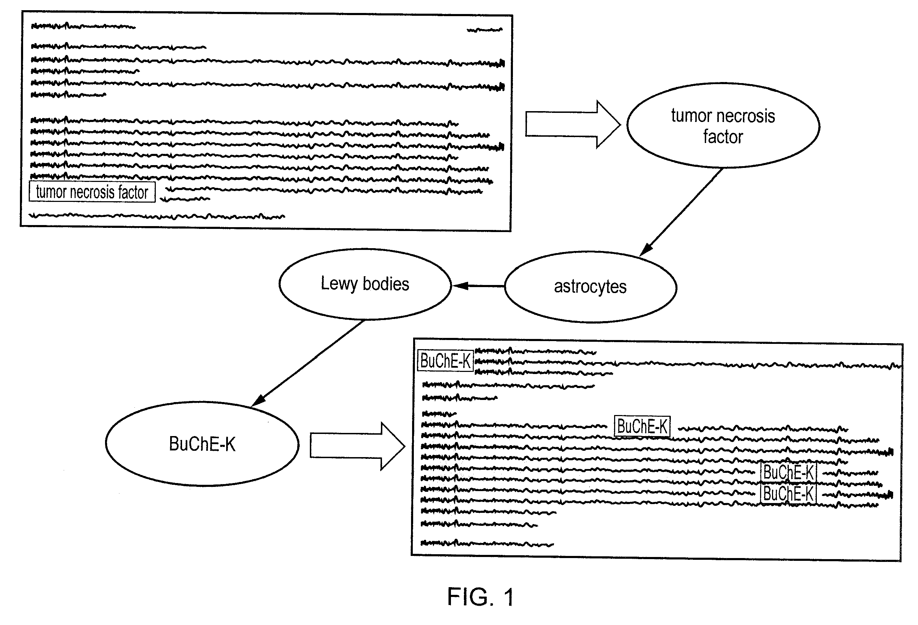

The link connecting the two terms and documents is depicted in the graph shown in Figure 1. In the figure we can see two articles connected by a path (tumor necrosis factor, astrocytes, Lewy bodies, BuChe-K). This path can be viewed as a semantically annotated path between documents (articles), because it indicates both the documents and the terms connecting them. The first and last terms are present in the particular articles, while the second and third connect them in the relatedness network computed from the corpus. The first article deals with the involvement of the tumor necrosis factor pathway in the mechanism of the Parkinson's Disease, while the second article investigates influence of particular alleles (like BuChe-K) on types of dementia related to protein complexes involved also in Parkinson's Disease. The relation between the articles shows their gradually changing topical connection via the protein complexes (Lewy bodies) and astrocytes (a type of glial cells). This type of information could be very helpful for facilitating discoveries using explicitly unrelated, but topically interconnected articles, if it were automatically computed, particularly across a whole corpus.

The literature based discovery field addresses the problem illustrated by the examples better than document similarity or clustering, however, some gaps still need to be covered before all the conditions specified in the beginning of this section are met. The conditions B) and C) are met by most of the literature-based discovery approaches as they typically take into account the conceptual structure of the whole corpus when computing the connections between complementary but disjoint literature.

However, the condition D) remains unmet by prior art since either the concept A, or both A and C have to be specified in the open and closed literature-based discovery modes. In theory, the existing solutions might be able to generate all possible combinations of A and C (and thus explore links between all the concepts in the corpus), but they are severely limited by practical computational intractability of such a task. This means that one generally cannot explore the data from any arbitrary point. In the example above, exploring any portion of the path (i.e., not necessarily starting from either 'tumor necrosis factor' or 'BuChE-K' nodes) may lead to interesting information which would not be available in the classical literature-based discovery models. In addition to this gap in the state of the art, many literature-based discovery solutions rely on co-occurrences and similarities, possibly augmented by frequency-based statistical measures when ranking promising connections.

This may result in two undesired effects: first of all, the discovered connections will be more likely rather incremental, i.e., close to what is already known, if using similarity-based measures for the ranking. Secondly, the prevalent measures based on similarity and frequencies are rather simplistic and do not model very well notions like surprise, novelty, informativeness, etc. In order to make the literature-based discovery process fulfil its promise, these issues have to be addressed better.

According to embodiments of a first aspect of the invention, there is provided a system arranged to produce a graph based on a corpus of textual documents, the graph including documents in the corpus as nodes, with links between the nodes annotated by connecting concepts, the connecting concepts directly and indirectly connecting the documents. The system comprises: a contents interface arranged to download the document contents from the textual documents in the corpus; a preliminary processor arranged to extract a graph of concepts from the document contents, wherein nodes of the concept graph represent the concepts, which are entities in the documents and weighted edges between pairs of nodes are weighted relations between the entities, the weights representing the relative significance of particular relationships; a filter arranged to filter the weighted edges between the nodes to retain edges with higher weights providing candidate paths between all the concepts; at least two scoring modules each arranged to score the candidate paths according to a scoring measure, wherein the measures model different aspects of the fitness of the paths for discovering facts within the corpus; an optimiser arranged to identify optimised paths of the concept graph that satisfy the scoring measures in an optimal manner; a document graph generator arranged to generate a graph of the documents in the corpus with concept-annotated links between them based on the optimised paths; and a graphical user interface, GUI, arranged to enable the user to view and navigate the document graph to discover facts within the corpus.

The system may be referred to as a discovery informatics system or apparatus, because it uses machine resources as a computer information system to aid discovery within a corpus. It may be local to a user, or it may be provided remotely, for example as a server on a network such as the internet, giving remote functionality, for example over a web interface.

The solution of invention embodiments aims at targeting all requirements defined in the beginning of the problem definition (A- measures of relatedness beyond mere similarity, B- reflecting the content of the documents in the links, C- global, not local measures, D-support for serendipitous exploration). The embodiments facilitate serendipitous exploration of a textual corpus based on annotated conceptual links between the particular documents.

The document graph contains paths with optimised links including the connecting concepts that join any two documents together. These encompass not only concepts contained within both documents, but also provide paths indirectly linking documents via a plurality of intermediate concepts.

The connecting concepts may also be considered as nodes on the document graph: each document-document link is provided with a semantic annotation in the form of one or more connecting concepts.

The preliminary processor may use any suitable methodology for weighting. For example, it may be arranged to use two measurements, such as corpus-wide co-occurrence of entities in the documents and similarity of entities in the documents, to weight the edges. The subsequent filtering may then be based on the product of a combination of the weights associated with the edges of the paths to be filtered.

The scoring modules for the candidate paths can include any suitable scoring modules to give at least two different measures of path characteristics that may be useful for assessing whether the path is informative. Preferably, the scores at this stage do not include simple co-occurrence or similarity of terms in the documents. They are more complex measures. The scores may reflect one or more of informativeness, coherence, complexity and rarity.

An informativeness scoring module may be arranged to calculate path entropy of each path to reflect informativeness, and the path entropy method may use a taxonomy of clusters, classify each node into one of the clusters, and associate each candidate path with the clusters that the nodes on the candidate path and adjacent nodes belong to, in order to provide an entropy measure of the associated clusters on each path in comparison to the total number of clusters.

A coherence scoring module may be arranged to calculate coherence of each path, based on similarity between consecutive nodes to give aggregate coherence and/or based on similarity between a start and an end node of the path to give start-end coherence.

In this context, similarity of two nodes may be a distributional similarity which makes use of the context of the nodes being compared to calculate similarity, or a taxonomy-based similarity, which uses a hierarchical taxonomy of clusters to calculate similarity.

A path complexity scoring module may be arranged to calculate path complexity. For instance, the complexity at a node may be the ratio of triangles in the neighbourhood of the node with respect to all the triangles that could possibly exist there, wherein a triangle is a sub-graph that connects the node with its two interconnected neighbours.

A path rarity scoring module may be arranged to calculate path rarity. This may be, for example an inverse document frequency, IDF, wherein IDF of a node is a measure of how rare the node is within the document corpus.

The IDF for a node t and document corpus D with documents d is calculated as

$$IDF(t, D) = \log \frac{|D|}{|\{d | d \in D \wedge t \in d\}|}.$$

The optimiser needs to take into account at least two different path measures. It may thus be arranged to compute a set of paths using multi-objective optimisation, for example to compute a set of paths which form a Pareto frontier with respect to the measures.

Preferably, the scoring modules for the candidate paths includes scoring modules for two or more contrasting measures, such as informativeness, coherence, complexity and rarity. In this case, the optimiser can be arranged to attempt to maximise path complexity, entropy, aggregated path coherence and rarity and minimise start-end path coherence for an optimum set of paths.

The document graph generator can be arranged to generate the document graph with concept-annotated links by starting from the optimised paths of the concept graph, and, for each document, generating localised sets of related documents and paths that connect them.

For example, the document graph generator can be arranged to generate the document graph with concept-annotated links by starting from the optimised paths of the concept graph, and, for a specific set of document identifiers $D$ and a graph $G_p$ induced by the optimal paths, by using the following algorithm assuming a mapping $M$ from nodes/terms to documents that contain them:

1. Initialise a graph $G_d$ equivalent to $G_p$.
2. For every document $d \in D$, do:

    a)Find a set $X$ of nodes in $G_p$ such that they are present in d using the mapping $M$.
    b)For every node x $\in X$, do:

        i. Add an edge $(x, d)$ to $G_d$.
        ii.Get a set of nodes $Y$ such that for every $y \in Y$ there is a shortest path $p$ between x and $y$ in $Gp$ and the product of the weights on the p edges is above a decay threshold E.
        iii.For every node $y \in Y$, do:

            A. Get a set of documents $E$ that contain $y$ using the mapping $M$.
            B. Add an edge $(y, e)$ to $G_d$ for every e $\in E$.

3. Return the graph $G_d$.

One or more of the scoring modules arranged to score the candidate paths can use multithreading to calculate the scores of different candidate paths in parallel. This is because calculations for the different candidate paths are designed not to be interdependent.

Also, one or more of the scoring modules arranged to score the candidate paths may use a cache that stores results for a part of a path (for example one or more links between concepts) which is used in several candidate paths.

If there is an informativeness scoring module and a coherence scoring module which both use a taxonomy of clusters, this taxonomy may be calculated once in a taxonomy module and used by both modules. The other measures do not need this taxonomy of clusters.

In some embodiments, the GUI can be arranged to display the connections between connecting concepts in a way that reflects their relative importance, in terms of their weightings. The actual weights may be displayed or the connections may be displayed as differently (e.g. thicker or in different colours) for different (groups of) weightings.

According to embodiments of a second aspect of the invention there is provided a method of producing a graph based on a corpus of textual documents, the graph including documents in the corpus as nodes, with links between the nodes annotated by connecting concepts, the connecting concept directly and indirectly connecting the documents, the method comprising: a preliminary processing stage of extracting a graph of concepts from the documents' contents, wherein nodes of the graph represent the concepts, which are entities in the documents and edges are weighted relations between the entities, the weights representing the relative significance of particular relationships; filtering the weighted edges between the nodes to retain only edges with higher weights as candidate paths between nodes; scoring the candidate paths according to at least two measures that model different aspects of the fitness of the paths for discovering facts within the corpus; identifying the paths that satisfy the scoring measures in an optimal manner; and generating a graph of the documents in the corpus with concept-annotated links between them based on the optimised paths.

According to embodiments of a third aspect of the invention there is provided a user method of browsing a graph produced according to the methods described herein, wherein the user enters a search term which is used to display at least a portion of the graph including the search term as a connecting concept or document and/or wherein a user can navigate across the graph to connecting concepts and documents surrounding a particular connecting concept or document. The document representation on the graph may act as a link to the document itself.

A method according to preferred embodiments of the present invention can comprise any combination of the previous apparatus aspects. Methods according to these further embodiments can be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

Thus according to one aspect there is provided a program which, when loaded onto at least one computer apparatus, configures the at least one computer apparatus to become the discovery informatics system according to any of the preceding apparatus definitions or any combination thereof.

According to a further aspect there is provided a program which when loaded onto the at least one computer apparatus configures the at least one computer apparatus to carry out the method steps according to any of the preceding method definitions or any combination thereof.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable non- transitory storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results.

Elements of the invention have been described using terms such as "preliminary processor", "filter" "module", "optimiser", "graph generator". The skilled person will appreciate that such terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Brief Description of the Drawings

Reference is made, by way of example only, to the accompanying drawings in which:

Figure 1 is a example of links between two documents across intermediate concepts;
Figure 2 is an overview of a system according to invention embodiments;
Figure 3 is an overview flow diagram of processing according to invention embodiments;
Figure 4 is a diagram showing extraction of relations from text;
Figure 5 is a diagram of an extracted conceptual network;
Figure 6 is a diagram showing clusters in an extracted conceptual network;
Figure 7 is a diagram showing processing to compute path entropy;
Figure 8 is a diagram showing processing to compute path coherence;
Figure 9 is an example of a taxonomy of clusters;
Figure 10 is a diagram of processing to compute a path complexity score;
Figure 11 is a diagram of processing used to compute an IDF score of paths;
Figure 12 is a diagram showing processing to compute optimal paths;
Figure 13 is a diagram showing computation of the document to document links in the document graph;
Figure 14 is a concept relationship graph induced by optimal paths in the previous example;
Figure 15 is a document relationship graph induced by the optimal paths in the previous example; and
Figure 16 is an overview diagram of an implementation of the invention embodiments in hardware.

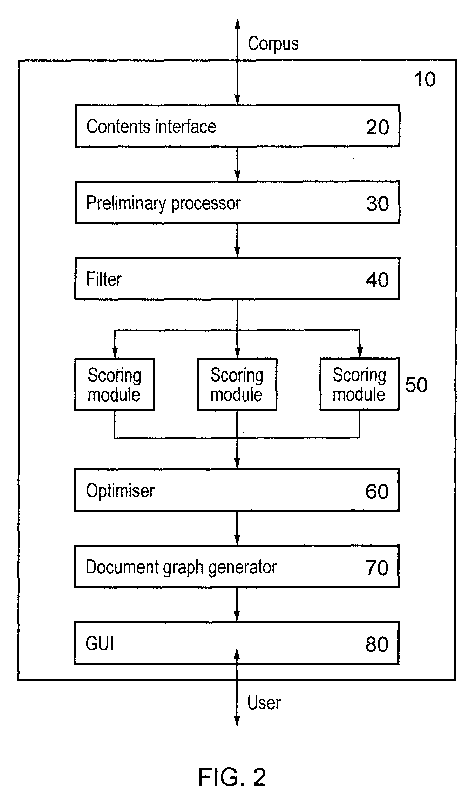

Figure 2 shows the individual components in a discovery informatics system 10, which components act together to carry out the method of invention embodiments. Contents interface 20 receives information from a document or literature corpus in the form of whole document content (or potentially abstract content) for each of the documents. This content is used in preliminary processor 30 to provide a graph of contents which is filtered by filter 40 to narrow down the edges in the graph to those which are a better indicator of the relationship between the concepts.

It is noted that these concepts or entities may be selected from the contents either using normal processing for extracting important terms from documents or by specific processing, for example to extract contents related to a certain field or ontology.

Scoring modules 50 are provided essentially in parallel and score the candidate paths graph according to one scoring measure per scoring module. Three scoring modules are shown but there may be more or fewer, in dependence upon the particular implementation. Each scoring measure is a more sophisticated and well-founded measure than simple co-occurrences and similarities which may be used to extract the graph of concepts and filter the graph.

It is further noted that the scoring measures allow the contents of the documents in the whole corpus to be used to compute results so that they are not limited to more local processing.

The scores from the scoring modules are fed into optimiser 60 which computes which paths should remain in the graph using a multi-objective optimisation technique.

A document graph is then generated by document generator 70 and this document graph accessed by a GUI 80 for the user. The document graph allows for any arbitrary entry point into the graph, for example by means of a search term or by selecting a concept or even document directly from a visualisation of the graph. The graph can be viewed as a localised network and supports totally openended navigation within the corpus, thus facilitating discoveries.

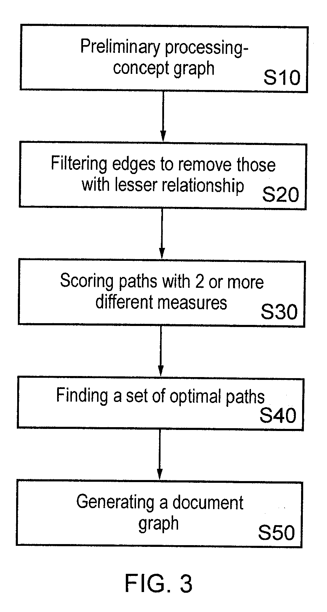

Figure 3 is an overview of the method of invention embodiments which essentially corresponds to the structure of the system shown in Figure 2. In step S10 preliminary processing produces a concept graph. In step S20, edges on the graph are filtered to remove those edges which demonstrate a lesser relationship between two concepts. In step S30, the paths are scored with at least two different scoring measures which thus model at least two aspects of the fitness of the conceptual paths for discovery. In step S40 a set of optimal paths is found using an optimisation technique. Finally in step S50 a document graph is generated.

Specific invention embodiments address the problem of discovering significant paths within networks of concepts extracted from textual documents, and using these for constructing semantically (concept) annotated document-document links in novel discovery informatics applications. We first describe the high-level work-flow of the proposed solution and then focus on the particular elements of the work-flow that form the working core of the invention embodiments.

## Overview

The method takes a set of textual documents (corpus) as an input and produces a graph that links the documents via paths of connecting concepts. Computing the paths that have high potential for making discoveries based on the corpus may be viewed as the core of the invention embodiments.

Before computing the promising paths themselves, the (much larger number of) candidate paths are produced from the raw text using preliminary processing, for example based on Vit Novacek and Gully APC Burns. SKIMMR: Facilitating knowledge discovery in life sciences by machine-aided skim reading. PeerJ, 2014. Available at https://peerj .com/articles/483/. The production of concept paths described in this document is incorporated herein by reference.

First we use entity (key term) recognition with measures for co-occurrence and semantic similarity to determine relationships between concepts in publications. The result of this step is represented as a graph or network from which shortest paths between all concepts are computed. Out of these, only the ones with a product of the associated edge weights higher than a pre-defined threshold are retained for further processing.

The actual document-link structure computation following the preliminaries can proceed in a pipeline with the following phases:

1. Scoring the paths: Computing more sophisticated measures associated with the paths, based on formal modeling of path informativeness, complexity, coherence, etc. The specific steps for scoring the paths consist of the following:

   a) Computing hierarchical cluster structure from the entity (key term) network
   b) Computing various path scores using the network itself and the cluster structure

   - Path entropy (modeling information value)
   - Path coherence (modeling topical stability and progression)
   - Path complexity (modeling structural non-triviality)
   - Path rarity (modeling non-obviousness)

2. Selecting optimal paths: Define the ultimate task as a multiobjective optimisation problem with path scores as objectives and find a set of optimal, for example Pareto-optimal paths.
3. Computing document-document links: Use the optimal concept paths to compute document-document links annotated by the concepts that indirectly connect the documents.

Note that although we define several specific measures as examples in this document, the proposed path scoring and optimisation techniques are easily extensible to other measures that follow the general principles defined here.

Once the document-document links have been computed, the resulting data structure can be used for many tasks in a broader area of so called discovery informatics. The potential uses are (a non-exhaustive selection of examples):

- serendipitous knowledge discovery by navigating the document links annotated by intermediate concepts;
- open literature-based knowledge discovery with arbitrary entry point;
- document classification based on conceptual relationships instead of the document similarity measures or clustering;
- various applications enabled by document meta-data (like authorship and affiliation):

  ∘ expert finding (identifying authors strongly associated with particular conceptual areas);
  ∘ topical community detection (using the network of authors implied by the computed document link graph to find communities related to particular topics).

## Detailed Embodiment

The proposed method for supporting discoveries using semantically annotated document links relies on the blocks in the afore-mentioned pipe-line. In the following, we first describe the type of data being produced in the preliminary processing (computing concept paths from document content), and then give details on the core innovative parts in the remaining sections.

## Preliminaries

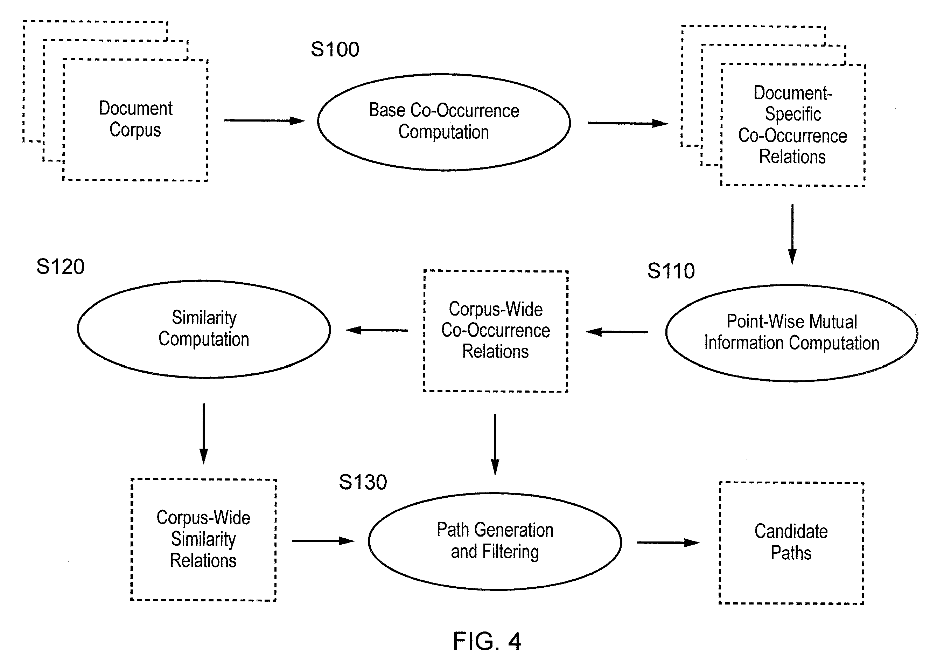

The above preliminary processing takes texts as an input and produces a set of paths between terms present in the texts, based on a network of co-occurrence and similarity relationships between the terms. The schema of these steps is illustrated in Figure 4 that describes a four-stage process. Firstly, in step S100, a base co-occurrence of terms is computed from the document corpus, providing document-specific co-occurrence relations. This can be, for example, by using a text-mining tool to extract pairs of named entities and then by computing their co-occurrence score in specific documents. In Step S110 point-wise mutual information computation aggregates the individual document co-occurrence scores across the whole corpus, to give scores for pairs of terms for the whole corpus. Step S120 is a similarity computation, producing corpus-wide similarity relations. Similarity is a higher-level type of relationship between entities that may not be covered by co-occurrence. Essentially, the calculation for two entities takes into account how they are linked by shared entities related to both of them. Cosine similarity may be used. In step S130 the corpus-wide similarity relations and co-occurrence relations are used to generate paths and filtering is used to cut down the number of paths to eliminate paths between concepts that are not strongly connected. Full details of a suitable preliminary processing method are described in Vit Novacek and Gully APC Burns. SKIMMR: Facilitating knowledge discovery in life sciences by machine-aided skim reading. *PeerJ,* 2014. Available at https://peerj .com/articles/483/.

The last stage of preliminary processing consists of constructing a graph from all previously computed co-occurrence and similarity relationships where the edges are annotated by the corresponding relationship weights. From this graph, we construct paths between all pairs of nodes. These paths can then be filtered as mentioned above, specifically based on the product of the relationship weights on their edges (omitting paths with the product weight below a threshold). This basic filtering is performed to reduce the combinatorial explosion of the space of all possible paths for larger conceptual networks.

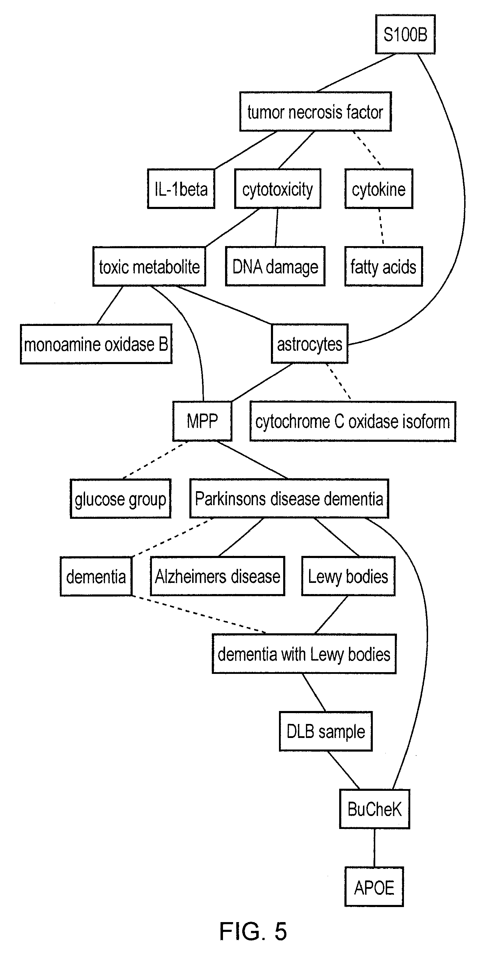

**Example 1** An example of such a graph, constructed from the Parkinson's Disease corpus described in Vit Novacek and Gully APC Burns. SKIMMR: Facilitating knowledge discovery in life sciences by machine-aided skim reading. PeerJ, 2014. Available at https://peerj .com/articles/483/ is provided in Figure 5. The graph already corresponds to a filtered set of paths. We will use the example illustrated in the graph as a basis for further specific details illustrating the method. Please note that the example is an elaboration of the much simpler document/concept graph used for the illustration of the problem. The example will be extended to demonstrate how one can support discovery informatics applications based on the details of the invention embodiments as they are introduced in this section.

**Scoring the Paths**

The basic filtering only removes paths with edges of low statistical significance. However, the remaining number of paths is typically still quite large for corpora consisting of more than couple of documents, which makes the paths very impractical for realising discovery informatics application. The paths also still contains some noise resistant to purely statistical filtering. Therefore invention embodiments define a plurality of more sophisticated scores for the paths. These scores effectively model features like information value, topical coherence and complexity of the knowledge represented by a particular path. The scores are introduced in dedicated sections below.

For the implementation of all the measures, invention embodiments use specific optimisations. We use multithreading instead of sequential programming, where each thread processes a (balanced) portion of the input paths for which the scores are supposed to be computed. This is due to the fact that there are no dependencies between the score computation for any particular path. The second optimisation is caching as there are many repeating computations that can be shared among several paths based on the shared sub-paths.

**Path Entropy**

The path entropy measure reflects the information content of the path and its context, i.e., the nodes that are contained within the path and adjacent to it. The higher the entropy is, the more information is contained within the path and its context, meaning it is more likely to be basis of a discovery. In order to compute entropy of the path and its context, we need to classify the nodes into clusters first. For that, we can either use a domain-specific taxonomy (such as the MeSH standard vocabulary in the biomedical domain, c.f., http://www.ncbi.nlm.nih.gov/mesh), or compute the taxonomy from the extracted conceptual network itself, using for instance a hierarchical clustering method. One such method is introduced in Vit Novacek. A methodology for empirical analysis of LOD datasets. CoRR, abs/1406.1061, 2014 which is incorporated herein by reference.

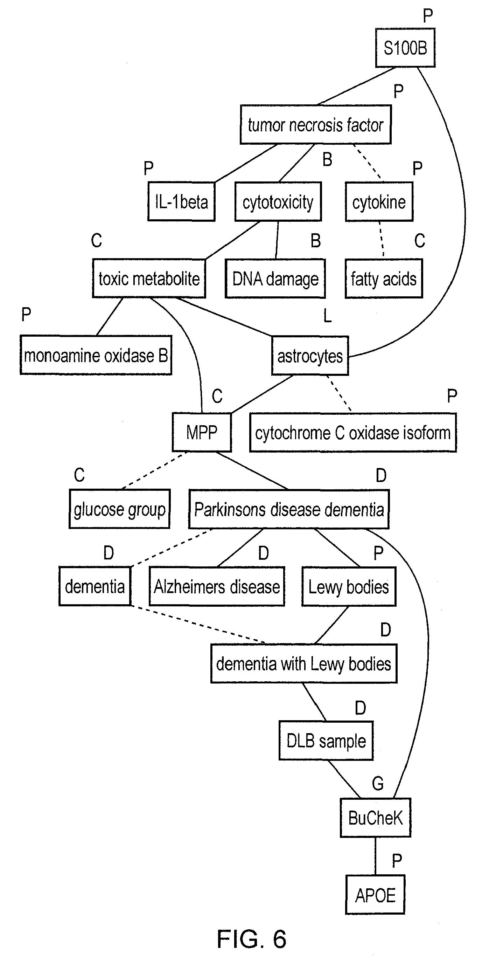

**Example 2** Example of a possible clustering is shown in Figure 6. The clusters displayed are as follows:

1. P - proteins and related concepts;
2. D - diseases and related concepts;
3. B - biological processes and/or features;
4. C - chemicals and related concepts;
5. L - cells;

6. *G- genes and related concepts.*

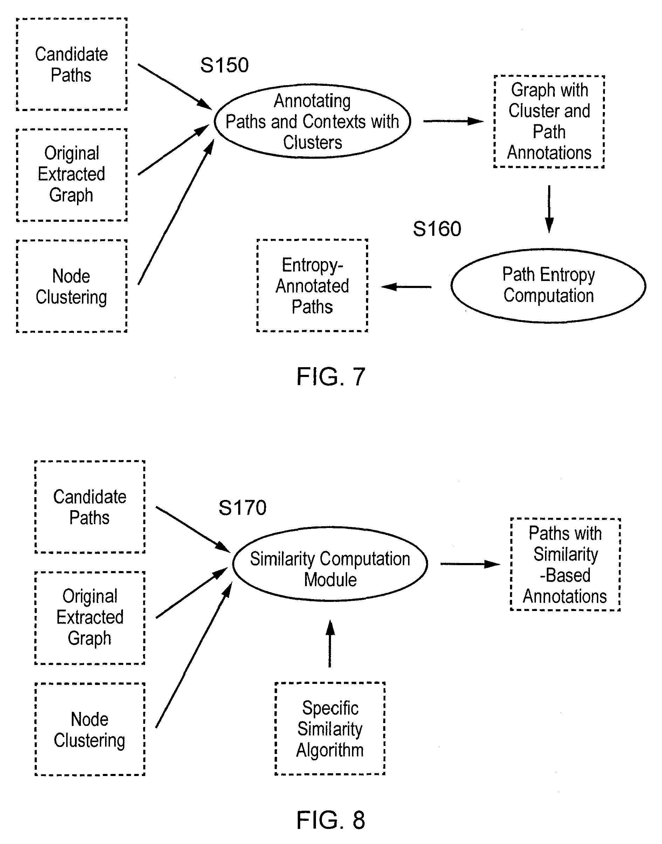

The work-flow for path entropy computation is depicted in Figure 7. Step S150 is rather straightforward and consists of associating every candidate path with a set of clusters that the nodes on the path and adjacent to it belong to. Step S160 calculates entropy using the clusters, for example as set out below.

**Example 3** For instance, the path p: Alzheimers disease - Parkinsons disease dementia - BuCheK - APOE from Figure 5 would be associated with clusters D (diseases), C (chemicals), P (proteins), G (genes).
Based on the cluster annotations of the paths, we define path-specific cluster volumes as

$$V(c,p) = |\{u|u \in VX(p) \cup CX(p) \wedge u \in c\}|,$$

where c is a cluster, p is a path and V X, CX are functions returning nodes in a path and its adjacent context, respectively. The volume can be used to define a probability P (ci, p) that a node in a path p and its context belongs to a specific cluster ci:

$$P(c_i,p) = \frac{V(c_i,p)}{\sum_{c_j \in C(P)} V(c_j,p)},$$

where C is a function returning all cluster annotations for a given path. This probability is eventually used in the following path entropy definition

$$E(p) = -\sum_{c_i \in C(p)} P(c_i,p) \cdot \log_2 P(c_i,p).$$

**Example 4** The cluster volumes of the path from the previous example are

$$V(D,p) = 4, V(C,p) = 1, V(P,p) = 2, V(G,p) = 1$$

and the corresponding node-cluster association probabilities are

$$P(D,p) = 0.5, P(C,p) = 0.125, P(P,p) = 0.25, P(G,p) = 0.125.$$

The entropy is then

$$E(p) = -(0.5 \log_2 0.5 + 2 \cdot 0.125 \log_2 0.125 + 0.25 \log_2 0.25) = -(-0.5 - 0.75 - 0.5) = 1.75.$$

**Path Coherence**

We use semantic similarities to model topical coherence of concepts (nodes) along the path. If the subsequent nodes on the path are similar to each other, it means the topics do not change much. On the other hand, if the start and end points of a path are dissimilar, it means that the path has a potential to navigate a browser across different sub-domains in the corpus. The schema of the path coherence score computation is depicted in Figure 8. The inputs to steps S170 are the same as for the path entropy and the outputs are path annotations with similarity-based scores attached to them. Two similarity-based scores are used here, aggregate path coherence and start-end path coherence, as explained in the following:

Aggregate path coherence is defined on the subsequent nodes in a path:

$$p = (v_1, v_2, \ldots, v_n)$$

Several alternative calculations of aggregate path coherence are possible, such as product coherence:

$$PC(p) = \Pi_{i \in \{1,\ldots,n\}} sim(v_i, v_{i+1})$$

(rather strict since any zero similarity will render the measure zero), or mean coherence:

$$MC(p) = \frac{1}{n} \sum_{i \in \{1,\ldots,n\}} sim(v_i, v_{i+1})$$

(more forgiving with respect to zero similarities);

Start-end path coherence is defined as:

$$NC(p) = sim(v_1, v_n)$$

*i.e.*, a similarity between the first and last node on the path.

For computing the similarities, we can employ various algorithms that are available for the data at hand, such as distributional similarity or taxonomy-based similarity. Distributional similarities make use of context of the elements (i.e., nodes) being compared, while taxonomy-based similarities utilise features of a taxonomy in which the elements are organised (mostly distance and/or information content).

A specific simple distributional example is cosine similarity defined as

$$sim_{cos}(u, v) = \frac{\mathbf{u} \cdot \mathbf{v}}{|\mathbf{u}||\mathbf{v}|},$$

where x is a context vector corresponding to a node x. The vector's dimensions correspond to all possible nodes that can occur as neighbours of a node (i.e., all nodes in the extracted concept network), and the values for the particular dimensions correspond to the weights of the edges connecting the nodes. One can also perform dimensionality reduction if the context vector space is too large and/or noisy for practical computations.

An example of taxonomy-based similarity is one based on the work of Wu-Palmer (but there are many other types of semantic similarity), which can be defined as follows in our case

$$sim_{tax}(x, y) = max(\{\frac{2 \cdot dpt(lcs(u, v))}{dpt(u) + dpt(v)} | u \in C(x), v \in C(y)\}),$$

where the specific cluster identifiers in the sets *C(x)*, *C(y)* are interpreted as nodes in the hierarchical cluster taxonomy (either computed from the data itself or provided externally). The *lcs* function computes the least common subsumer of two nodes in the taxonomy and *dpt* is the depth of a node in the taxonomy (defined as zero if no node is supplied as an argument, *i.e.*, if *lcs* has no result).

*Example 5* To give a specific example of path similarity measures, let us return to the path from the previous example:

p: Alzheimers disease - Parkinsons disease dementia - BuCheK - APOE

There are four concepts on the path which can be associated with corresponding context vectors. The vector space of the example concept network has 21 dimensions (the total number of nodes in the network). If we assign dimension numbers to the nodes in Figure 2 from top to bottom and left to right, the p node vectors can be organised in the following matrix (without loss of generality, we assume the weights of the existing edges to be one to make this particular example simpler):

| | ... | 11 | ... | 14 | 15 | 16 | 17 | ... | 19 | 20 | 21 |
|---|---|---|---|---|---|---|---|---|---|---|---|
| *Alzheimers disease* | 0...0 | *0* | 0...0 | *1* | *0* | *0* | *0* | 0...0 | *0* | *0* | *0* |
| *Parkinsons disease dementia* | 0...0 | *1* | 0...0 | *0* | *1* | *1* | *1* | 0...0 | *0* | *0* | *0* |
| *BuCheK* | 0...0 | *0* | 0...0 | *1* | *0* | *0* | *0* | 0...0 | *1* | *0* | *1* |
| *APOE* | 0...0 | *0* | 0...0 | *0* | *0* | *0* | *0* | 0...0 | *0* | *1* | *0* |

Based on these vectors, all the consequent and start-end cosine similarities are zero.

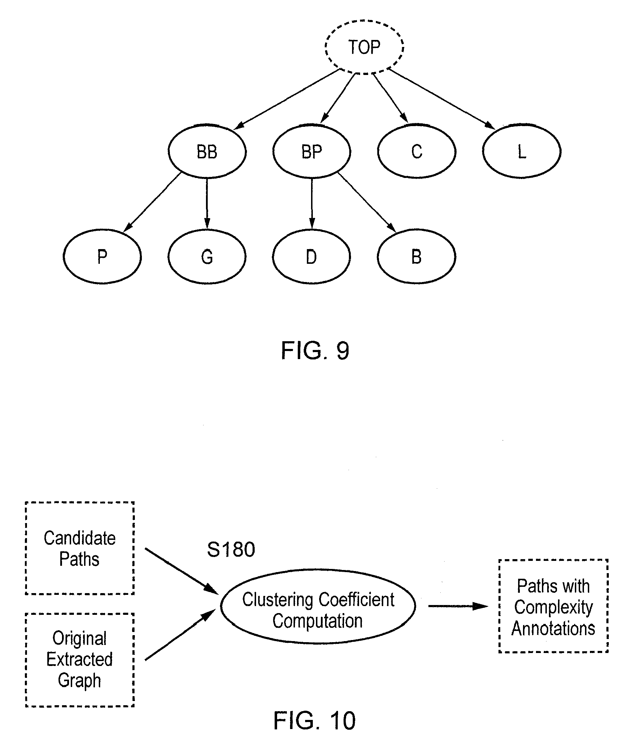

Before continuing with an example of the taxonomy-based similarity, we have to introduce a hierarchical organisation of the clusters for example as shown in Figure 9. The proteins and genes (P and G) clusters are put under a second-level BB cluster (building blocks). Similarly, the diseases and biological processes (D and B) are put under biomedical phenomena (BP). The cells and chemicals (L and C) remain without a parent cluster. For sparser notation, let us refer to Alzheimers disease and Parkinsons disease dementia by the AD, PDD abbreviations, respectively. Using the above simple taxonomy, the similarities between the consequent nodes on the path pare

$$sim_{tax}(\mathrm{AD},\mathrm{PDD}) = \frac{2 \cdot 2}{2 + 2} = 1, sim_{tax}(\mathrm{PDD},\mathrm{BuCheK}) = 0, sim_{tax}(\mathrm{BuCheK},\mathrm{APOE}) = \frac{2 \cdot 1}{2 + 2} = 0.5,$$

Note that we define the depth as a distance from a virtual taxonomy top-most root, so that the actual top-level nodes have depth 1. The mean path coherence is then MC$(p) = {}^1$ $(1 + 0 + 0.5) = 0.5$. The start-end coherence r has a zero depth (the virtual top-level node).

## Path Complexity

More complex information may have higher potential for making discoveries, therefore we also need to model complexity of the paths and the surrounding nodes. The schema of the process is depicted in Figure 10. The particular measures of complexity we use in step S180 is an average clustering coefficient of the nodes on the path, computed with respect to the immediate neighbouring nodes along the path. For a single node v, the clustering coefficient

$$CC(v) = 2\frac{|\{(x,y)|x,y \in N(v) \wedge (x,y) \in E\}|}{|N(v)|(|N(v)| - 1)},$$

where $N(v)$ is the set of neighbours of $v$ and $E$ is the set of existing graph edges.

In other words, the clustering coefficient is the ratio of triangles existing in the neighbourhood of a node with respect to all triangles that could possibly exist there, where triangle is a sub-graph that connects the node in question with its two interconnected neighbours. The complexity of a path is then measured as an arithmetic mean of the clustering coefficients of the nodes on it.

**Example 6 The clustering coefficient of the path used in previous examples is zero as there are no triangles in its context, however, another sample path**

*q: Parkinsons disease dementia* - MPP *astrocytes*

has a complexity of $\frac{1}{9}$ as there is one triangle shared by the 'MPP' and 'astrocytes' nodes (with the 'toxic metabolite' node) which results into the respective clustering coefficients $0, \frac{1}{3}, \frac{1}{9}$ for the nodes on the path.

## Path Rarity

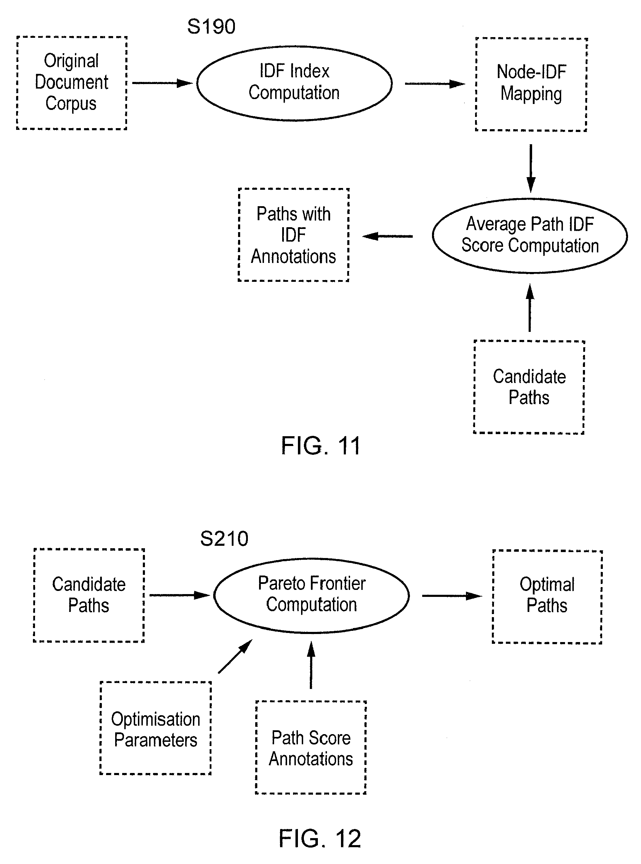

If a path contains a node that appears in many documents in the corpus, it can make virtually everything connected, which lowers the potential of such path for refined discoveries. The risk of that can be lowered by taking into account another measure - inverse document frequency (IDF) of the path nodes, a measure of how rare are particular nodes within the corpus. The schema of the score computation is provided in Figure 11.

The IDF measure of step S190 for a node/term $t$ and document corpus $D$ is defined as

$$IDF(t, D) = \log \frac{|D|}{|\{d|d \in D \wedge t \in d\}|}.$$

To measure the IDF score of a path, we can use several means for aggregating the scores of the particular nodes, such as minimum or arithmetic mean (S200).

**Example 7** The IDF scores of the paths introduced in the previous examples are based on the following absolute document frequencies of the terms:

p: Alzheimers disease / 6 - Parkinsons disease dementia / 2 - BuCkeK / 1- APOE / 12,
q: Parkinsons disease dementia / 2 - MPP / 7 - astrocytes / 8.

*Since the total number of documents in the Parksinson's Disease corpus is 4,724, the IDF scores of the nodes on the paths are as follows (using 10-base logarithm):*

p: $Alzheimers\ disease\ /\ \log \frac{4724}{6} \doteq 2.896 - Parkinsons\ disease\ dementia\ /\ \log \frac{4724}{2} \doteq 3.373 - BuCheK\ /\ \log \frac{4724}{1} \doteq 3.674 - APOE\ /\ \log \frac{4724}{12} \doteq 2.595,$

q: $Parkinsons\ disease\ dementia\ /\ \log \frac{4724}{2} \doteq 3.373 - MPP\ /\ \log \frac{4724}{7} \doteq 2.829 - astrocytes\ /\ \log \frac{4724}{8} \doteq 2.771.$

The aggregate score for p is either 2.771 or 2.991 (minimum or mean, respectively), similarly for q it is either 2.595 or 3.135.

Selecting Optimal Paths

The measures introduced in the previous sections model various aspects of the paths that reflect their potential for making discoveries. However, having just the measures is not particularly helpful, since some of them are quite intricately interdependent and others may actually be conflicting in practice. In order to find out which paths satisfy the measures in whole in the best manner, we need to approach the problem as a multi-objective optimisation task, as defined, for example in [1] Agoston E. Eiben and J.E. Smith. Multi-modal problems and spatial distribution. In Agoston E. Eiben and J.E. Smith, editors, Introduction to Evolutionary Computing. Springer, 2007. Specifically, for this example we compute a set of paths that form a so called Pareto frontier with respect to the score annotation objective vectors. This is an area of solutions (i.e., paths) that cannot be improved in any of the objectives without degrading at least one of the other objectives. This produces a typically much reduced set of paths that maximises their potential for making non-trivial discoveries.

The schema of the optimisation method is provided in Figure 12. The method takes the paths and their score annotations as inputs, adjusts the values in the score annotation vectors according to the provided parameters so that they can be uniformly optimised, and then performs the optimisation itself in step S210, producing a list of Pareto-optimal paths.

The optimisation technique operates on vectors of measures associated with each solution where the measures are supposed to reflect some aspect of the particular solution's fitness. Traditionally, all the values in the solution vectors are supposed to be minimised in optimal solutions. An important notion in the Pareto-optimisation is dominance - a solution x1 dominates a solution x2 if

$$f_i(x^1) \leq f_i(x^2) \text{ for all indices } i \in \{1, \ldots, k\} \text{ and } f_i(x^1) < f_i(x^2) \text{ for at least one index } i \in \{1, \ldots, k\},$$

where k is the number of elements (i.e., measures) in the solution vectors and the fi(x) function returns the i-th element of vector associated with the solution x. A solution is called Pareto-optimal if it is not dominated by any other solution.

When defining the particular optimisation parameters, we follow certain intuitive assumptions:

1. Paths leading through more complex environs are more informative for a user, therefore the path complexity should be maximised.
2. Paths surrounded by many highly balanced (*i.e.,* entropic) topics are more informative, therefore the entropy should be maximised.

3. Coherent paths with gradual topical changes on the way are better (less chaotic, more focused progression from one topic to another en route to the linked text), therefore the aggregated path coherence should be maximised.

4. It is more interesting when one ends up in a topically distant (incoherent) area (once the progress through the topics is gradual, i.e., less random), therefore the start-end path coherence should be minimised.

5. Paths should not contain many nodes that are very frequent (*i.e.,* obvious) within the texts, therefore the path IDF score should be maximised.

These assumptions directly influence the optimisation parameters that define which values of the path score vectors should be maximised and which minimised. Since the Pareto-efficiency problem is defined as minimisation of all elements in the solution vector as we have seen above, we have to negate all scores that are supposed to be maximised, as illustrated in the following example.

**Example 8** The measures for the previously introduced paths p, q can be organised in a table:

|   | entrop | agg. | start-end | complexity | IDF |
|---|--------|------|-----------|------------|-----|
| V | 1.75 | 0/0.5 | 0/0 | 0 | 2.991 |
| Q | 2.126 | 0.25/0 | 0.25/0 | 0.167 | 3.135 |

The coherence values are two-fold for cosine and taxonomy-based similarities, respectively. For the IDF score, we use the mean value in this example. Since we want to maximise all scores but the start-end coherence, the solution vectors for the paths look as follows (taking only the cosine similarity into account):

$$p : (-1.75, 0, 0, 0, -2.991), q : (-2.126, -0.25, 0.25, -0.167, -3.135).$$

Neither of the paths dominates each other, so each of them may possibly be part of an optimal solution for the given example.

Computing Document-Document Links

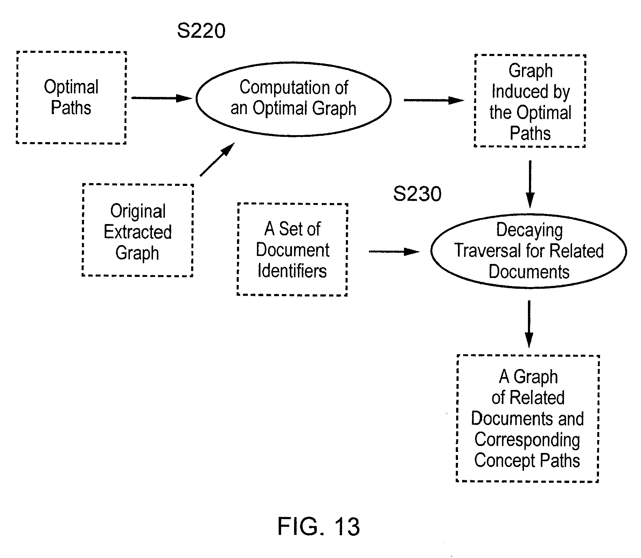

The last step of the presented method is using the optimal paths to compute the links between particular documents. The schema of this process is provided in Figure 13. First, a graph induced by the optimal paths is computed. This is done by taking the nodes and edges of the optimal paths as edges of the new graph and annotating the edges by the corresponding weights from the original extracted graph. The new graph can then be used for generating localised sets of related documents plus paths that connect them for any given document identifier. For a specific set of document identifiers $D$ and a graph $Gp$ induced by the optimal paths, this is done using the following algorithm (assuming a mapping $M$ from nodes/terms to documents that contain them):

1. Initialise a graph $G_d$ equivalent to *Gp.*
2. For every document $d \in D$, do:

    a) Find a set $X$ of nodes in $Gp$ such that they are present in $d$ (using the mapping $M$).
    b) For every node $x \in X$, do:

        i. Add an edge $(x, d)$ to $G_d$.
        ii. Get a set of nodes $Y$ such that for every $y \in Y$ there is a shortest path $p$ between $x$ and $y$ in $G_p$ and the product of the weights on the $p$ edges is above a decay threshold E.
        iii. For every node $y \in Y$, do:

            A.Get a set of documents E that contain $y$ (using the mapping M).
            B.Add an edge $(y, e)$ to $G_d$ for every $e \in E$.

    3. Return the graph $G_d$.

The resulting graph can be used for navigating the original document corpus in an innovative way supporting literature-based discoveries, as illustrated in Example 9 below. Please note that the $G_d$ graph may be initialised either with or without the edge weights from $G_p$, depending on the needs of the particular application using $G_d$. If one needs it only for navigating the document corpus, the weights are not necessary as the edges have already been filtered by the optimisation process. However, if a ranking of the connections is required, the weights can be conveniently used for that purpose. Also, one can easily keep track of the path measures associated with every vertex and edge in the resulting graph, which can in turn be used similarly to the $G_p$ edge weights.

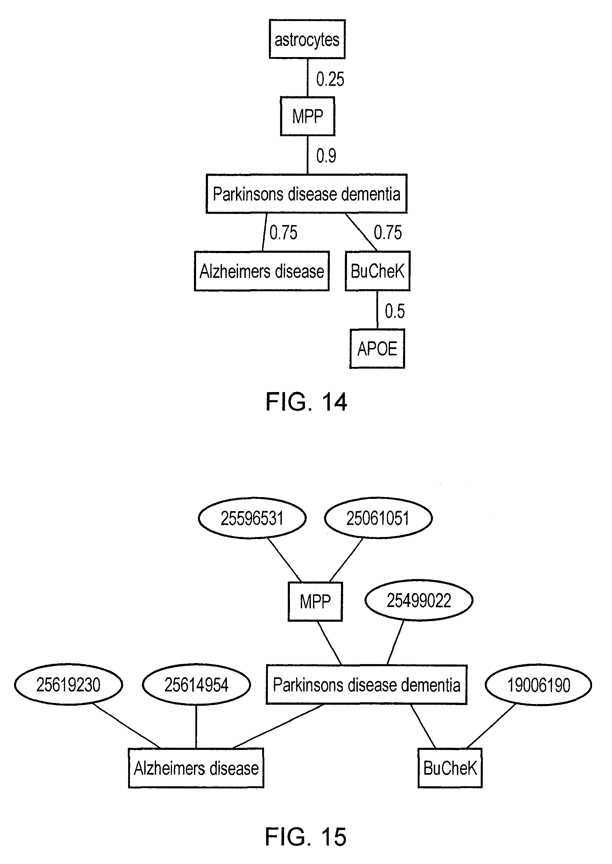

**Example 9** Let us assume the paths p, q are the only non-dominated paths in the example extracted graph (note that this is not really true as the situation is more complex even for such relatively simple graph that has over two hundred possible paths, nonetheless). The graph induced by the p, q paths is depicted in Figure 14. For the sake of this example, we associated the edges with fuzzy weights that allow us to illustrate the decay in the graph traversal when generating pairs of related documents.

Let us start with the PubMed document identifiers (PMIDs) 25596531 and 25061051 that point to the MPP node (simplified for brevity). Assuming the decay threshold E is set to 0.5, the nodes accessible from MPP are Parkinsons disease dementia, Alzheimers disease and BuCheK, as the corresponding paths have aggregate (product) weights of *0.9*, *0.675*, *0.675*, respectively, while all other possible paths do not cross the product weight of 0.5. Considering the following relevant node-document PMID associations (again, simplified as there are many more in reality)

Parkinsons disease dementia: 25499022;
Alzheimers disease: 25619230,25614954;
BuCheK: 19006190,
a graph of document-document connections shown in Figure 15 can be generated.

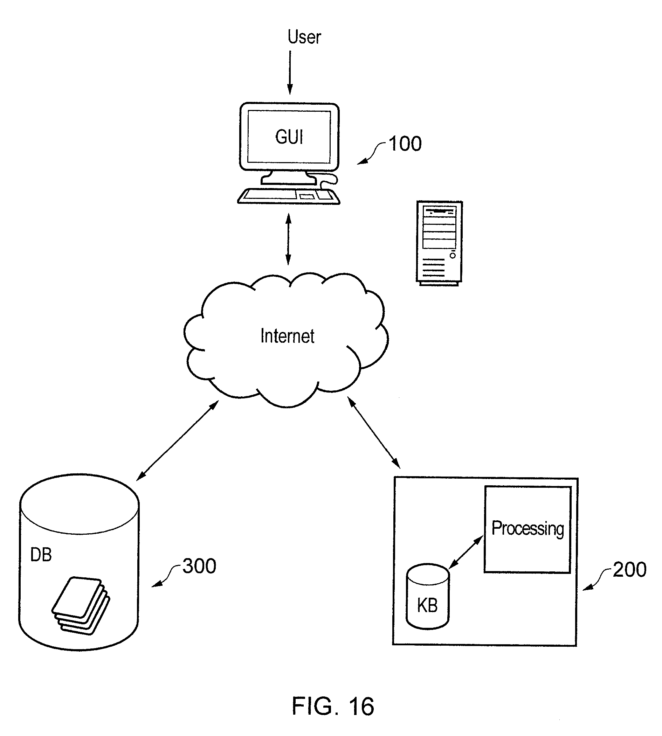

Figure 16 shows an implementation of the discovery informatics system. Here, the user is at local machine 100 which accesses the system over the internet. The user interfaces with the system over GUI provided by server 200 where the system is effectively located. This server includes a knowledge base KB of the document content and computed document graph, allowing the graph to be displayed to the user via the GUI. The server also includes the processing necessary to provide the graph. The diagram also shows a database 300 storing the textual documents. Of course, the documents may be provided from several different sources or provided with the system. In any case, their content (in the form of abstract, or whole document content and any other suitable part of the document content) is downloaded and stored to produce the concept graph and then the document graph.

Summary

The presented embodiment consists of many specific steps which, however, implement a very clearly focused solution applicable to many tasks in discovery informatics.The combination of the steps is non-trival and unique. An implementation of the method delivers results superior to other related approaches, as has been demonstrated by experiments with a corresponding research prototype.

The invention embodiments provide a general method for generating document-document links annotated by intermediate concepts from a corpus of literature, consisting of the following stages:

a) Extracting a conceptual network from the documents, where nodes, i.e., concepts are represented by significant named entities and edges are weighted relations like co-occurrence, similarity or possibly other semantic relation- ships. The weights represent the relative significance of particular relation- ships.
b) Generating a set of concept-concept paths that can support discoveries based on the input corpus.
c) Scoring the paths according to their informativeness, coherence, complexity and rarity.
d) Identifying paths that satisfy all the scores in a most optimal manner.
e) Generating a graph of connections between documents based on the graph implied by the optimised paths.

The embodiments provide a specific method for defining a potential of a conceptual path for making a discovery using well-founded measures of informativeness, coherence, complexity and rarity.

The embodiments provide a specific definition of the measure of rarity by means of inverse document frequency.

The embodiments provide a specific optimised method for computing the measures using multithreading and caching.

The embodiments provide a specific extensible method of multi-objective optimisation with particular measures as objectives in order to refine the paths to the set of most promising ones. The measure can be either those explicitly described here as examples, or other measures with characteristics defined here in the corresponding sections.

The embodiments provide a specific method for constructing the graph with concept-annotated links between documents based on the optimised paths.

**Claims**

1. A discovery informatics system arranged to produce a graph based on a corpus of textual documents, the graph including documents in the corpus as nodes, with links between the nodes annotated by connecting concepts, the connecting concepts directly and indirectly connecting the documents, system comprising:

   a contents interface arranged to download the document contents from the textual documents in the corpus;
   a preliminary processor arranged to extract a graph of concepts from the document contents, wherein nodes of the concept graph represent the concepts, which are entities in the documents and weighted edges between pairs of nodes are weighted relations between the entities, the weights representing the relative significance of particular relationships;
   a filter arranged to filter the weighted edges between the nodes to retain edges with higher weights providing candidate paths between all the concepts;
   at least two scoring modules each arranged to score the candidate paths according to a scoring measure, wherein the measures model different aspects of the fitness of the paths for discovering facts within the corpus;
   an optimiser arranged to identify optimised paths of the concept graph that satisfy the scoring measures in an optimal manner;
   a document graph generator arranged to generate a graph of the documents in the corpus with concept-annotated links between them based on the optimised paths; and
   a graphical user interface, GUI, arranged to enable the user to view and navigate the document graph to discover facts within the corpus.

2. A system according to claim 1, wherein the preliminary processor is arranged to use two measurements, such as corpus-wide co-occurrence of entities in the documents and similarity of entities in the documents, to weight the edges and/or wherein
   the filtering is based on the product of a combination of the weights associated with the edges of the paths to be filtered.

3. A system according to any of the preceding claims, wherein the scoring modules for the candidate paths include scoring modules for one or more of informativeness, coherency, complexity and rarity.

4. A system according to any of the preceding claims, wherein an informativeness scoring module is arranged to calculate path entropy of each path to reflect informativeness, and the path entropy method uses a taxonomy of clusters, classifies each node into one of the clusters, and associates each candidate path with the clusters that the nodes on the candidate path and adjacent nodes belong to, in order to provide an entropy measure of the associated clusters on each path in comparison to the total number of clusters.

5. A system according to any of the preceding claims, wherein a coherence scoring module is arranged to calculate coherence of each path, based on similarity between consecutive nodes to give aggregate coherence and/or based on similarity between a start and an end node of the path to give start-end coherence, and preferably wherein similarity of two nodes is a distributional similarity which makes use of the context of the nodes being compared to calculate similarity, or a taxonomy-based similarity, which uses a hierarchical taxonomy of clusters to calculate similarity.

6. A system according to any of the preceding claims, wherein a path complexity scoring module is arranged to calculate path complexity, wherein the complexity at a node is the ratio of triangles in the neighbourhood of the node with respect to all the triangles that could possibly exist there, wherein a triangle is a sub-graph that connects the node with its two interconnected neighbours and/or wherein
   a path rarity scoring module is arranged to calculate path rarity as inverse document frequency, IDF, wherein IDF of a node is a measure of how rare the node is within the document corpus, IDF for a node t and document corpus D with document d preferably being calculated as

$$IDF(t, D) = \log \frac{|D|}{|\{d | d \in D \land t \in d\}|}.$$

7. A system according to any of the preceding claims, wherein the optimiser is arranged to compute a set of paths using multi-objective optimisation, for example to compute a set of paths which form a Pareto frontier with respect to the measures.

8.  A system according to any of the preceding claims, wherein the scoring modules for the candidate paths include scoring modules for informativeness, coherence, complexity and rarity and the optimiser is arranged to attempt to maximise path complexity, entropy, aggregated path coherence and rarity and minimise start-end path coherence for an optimum set of paths.

9.  A system according to any of the preceding claims, wherein the document graph generator is arranged to generate the document graph with concept-annotated links by starting from the optimised paths of the concept graph, and, for each document, generating localised sets of related documents and paths that connect them and/or wherein the document graph generator is arranged to generate the document graph with concept-annotated links by starting from the optimised paths of the concept graph, for a specific set of document identifiers $D$ and a graph $G_p$ induced by the optimal paths, by using the following algorithm assuming a mapping $M$ from nodes/terms to documents that contain them:

> 1. Initialise a graph $G_d$ equivalent to $G_p$.
> 2. For every document $d \in D$, do:
>
>> a) Find a set $X$ of nodes in $G_p$ such that they are present in $d$ using the mapping $M$.
>> b) For every node $x \in X$, do:
>>
>>> i. Add an edge $(x, d)$ to $G_d$.
>>> ii. Get a set of nodes $Y$ such that for every $y \in Y$ there is a shortest path p between x and $y$ in $G_p$ and the product of the weights on the $p$ edges is above a decay threshold E.
>>> iii. For every node $y \in Y$, do:
>>>
>>>> A. Get a set of documents E that contain $y$ using the mapping $M$.
>>>> B. Add an edge $(y, e)$ to $G_d$ for every e $\in E$.
>
> 3. Return the graph $G_d$.

10. A system according to any of the preceding claims, wherein one or more of the scoring modules arranged to score the candidate paths uses multithreading to calculate the scores of different candidate paths in parallel and/or wherein one or more of the scoring modules arranged to score the candidate paths uses a cache that stores results for a part of a path which is used in several candidate paths.

11. A system according to any of the preceding claims, wherein the scoring modules include an informativeness scoring module and a coherence scoring module which both use a taxonomy of clusters, and a taxonomy module used by both modules is arranged to calculate this taxonomy.

12. A system according to any of the preceding claims, wherein the GUI is arranged to display the connections between connecting concepts in a way that reflects their relative importance, in terms of their weightings.

13. A method of producing a graph based on a corpus of textual documents, the graph including documents in the corpus as nodes, with links between the nodes annotated by connecting concepts, the connecting concept directly and indirectly connecting the documents, the method comprising:

> a preliminary processing stage of extracting a graph of concepts from the documents' contents, wherein nodes of the graph represent the concepts, which are entities in the documents and edges are weighted relations between the entities, the weights representing the relative significance of particular relationships;
> filtering the weighted edges between the nodes to retain edges with higher weights as candidate paths between nodes;
> scoring the candidate paths according to at least two measures that model different aspects of the fitness of the paths for discovering facts within the corpus;
> identifying the paths that satisfy the scoring measures in an optimal manner; and
> generating a graph of the documents in the corpus with concept-annotated links between them based on the optimised paths.

**14.** A user method of browsing a graph produced according to claim 19, wherein the user enters a search term, which is used to display at least a portion of the graph including the search term as a connecting concept or document, and/or wherein the user can navigate across the graph to connecting concepts and documents surrounding a particular concept or document.

**15.** A computer program, which when executed on a computing apparatus carries out a method of producing a graph based on a corpus of textual documents, the graph including documents in the corpus as nodes, with links between the nodes annotated by connecting concepts, the connecting concept directly and indirectly connecting the documents, the method comprising:

a preliminary processing stage of extracting a graph of concepts from the documents' contents, wherein nodes of the graph represent the concepts, which are entities in the documents and edges are weighted relations between the entities, the weights representing the relative significance of particular relationships;

filtering the weighted edges between the nodes to retain edges with higher weights as candidate paths between nodes;

scoring the candidate paths according to at least two measures that model different aspects of the fitness of the paths for discovering facts within the corpus;

identifying the paths that satisfy the scoring measures in an optimal manner; and

generating a graph of the documents in the corpus with concept-annotated links between them based on the optimised paths.

FIG. 1

FIG. 2

```
┌─────────────────────────────┐
│   Preliminary processing-   │
│      concept graph    S10   │
└─────────────────────────────┘
              │
              ▼
┌─────────────────────────────┐
│  Filtering edges to remove  │
│  those with lesser          │
│  relationship         S20   │
└─────────────────────────────┘
              │
              ▼
┌─────────────────────────────┐
│   Scoring paths with 2 or   │
│   more different measures   │
│                       S30   │
└─────────────────────────────┘
              │
              ▼
┌─────────────────────────────┐
│  Finding a set of optimal   │
│  paths                 S40  │
└─────────────────────────────┘
              │
              ▼
┌─────────────────────────────┐
│    Generating a document    │
│        graph          S50   │
└─────────────────────────────┘
```

FIG. 3

S100

Document Corpus → Base Co-Occurrence Computation → Document-Specific Co-Occurrence Relations

S120

Similarity Computation ← Corpus-Wide Co-Occurrence Relations ← Point-Wise Mutual Information Computation

S110

Corpus-Wide Similarity Relations → Path Generation and Filtering → Candidate Paths

S130

FIG. 4

FIG. 5

FIG. 6

Candidate
Paths

S150

Annotating
Paths and Contexts with
Clusters

Graph with
Cluster and
Path
Annotations

Original
Extracted
Graph

S160

Node
Clustering

Entropy-
Annotated
Paths

Path Entropy
Computation

**FIG. 7**

Candidate
Paths

S170

Similarity Computation
Module

Paths with
Similarity
-Based
Annotations

Original
Extracted
Graph

Node
Clustering

Specific
Similarity
Algorithm

**FIG. 8**

FIG. 9

FIG. 10

S190

```
┌ ─ ─ ─ ─ ─ ┐              ╭─────────────╮              ┌ ─ ─ ─ ─ ─ ┐
  Original                  IDF Index                    Node-IDF
  Document    ──────────▶   Computation    ──────────▶   Mapping
  Corpus                   ╰─────────────╯
└ ─ ─ ─ ─ ─ ┘                                           └ ─ ─ ─ ─ ─ ┘
```

```
┌ ─ ─ ─ ─ ─ ┐            ╭───────────────────╮
  Paths with               Average Path IDF
    IDF        ◀────────   Score Computation
  Annotations            ╰───────────────────╯
└ ─ ─ ─ ─ ─ ┘                     ▲
                                  │
                           ┌ ─ ─ ─ ─ ─ ┐
                             Candidate
                             Paths
                           └ ─ ─ ─ ─ ─ ┘
```

## FIG. 11

S210

```
┌ ─ ─ ─ ─ ─ ┐          ╭─────────────────╮          ┌ ─ ─ ─ ─ ─ ┐
  Candidate              Pareto Frontier             Optimal
  Paths      ─────────▶  Computation     ─────────▶  Paths
└ ─ ─ ─ ─ ─ ┘          ╰─────────────────╯          └ ─ ─ ─ ─ ─ ┘
                            ▲        ▲
                           ╱         │
              ┌ ─ ─ ─ ─ ─ ┐    ┌ ─ ─ ─ ─ ─ ┐
                Optimisation      Path Score
                Parameters        Annotations
              └ ─ ─ ─ ─ ─ ┘    └ ─ ─ ─ ─ ─ ┘
```

## FIG. 12

S220

```
┌─────────┐        ╭──────────────────╮        ┌──────────┐
│ Optimal │───────▶│   Computation of  │───────▶│  Graph   │
│  Paths  │        │  an Optimal Graph │        │ Induced by│
└─────────┘        ╰──────────────────╯        │the Optimal│
                            ▲                   │   Paths   │
                            │                   └──────────┘
           ┌─────────┐      │                        │
           │ Original│──────┘                        │
           │Extracted│           S230                ▼
           │  Graph  │                        ╭──────────────────╮
           └─────────┘   ┌──────────┐         │     Decaying      │
                         │  A Set of│────────▶│Traversal for Related│
                         │ Document │         │    Documents      │
                         │Identifiers│         ╰──────────────────╯
                         └──────────┘                 │
                                                      ▼
                                              ┌──────────────┐
                                              │   A Graph     │
                                              │  of Related   │
                                              │ Documents and │
                                              │ Corresponding │
                                              │ Concept Paths │
                                              └──────────────┘
```

FIG. 13

FIG. 14

FIG. 15

FIG. 16

Europäisches
Patentamt

European
Patent Office

Office européen
des brevets

# EUROPEAN SEARCH REPORT

Application Number

EP 15 19 8305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NORSHUHANI ZAMIN ET AL: "Unapparent Information Revelation for Counterterrorism: Visualizing Associations using a Hybrid Graph-based Approach", KNOWLEDGE MANAGEMENT INTERNATIONAL CONFERENCE (KMICE) 2012, 6 July 2012 (2012-07-06), pages 30-37, XP055292170, Sintok, Kedah, Malaysia ISBN: 978-983-207-865-4 * page 30, paragraph 4 * * page 31, paragraph 2 * * page 32, paragraph 3 * * page 33, paragraph 1 * * page 34, paragraph 5 - paragraph 8 * * page 35, paragraph 2 - paragraph 3 * * page 35, paragraph 5 - paragraph 6 * ----- | 1-15 | INV. G06F17/30 |
| Y | Maciej Ceglowski ET AL: "Semantic Search of Unstructured Data using Contextual Network Graphs", , 31 December 2003 (2003-12-31), pages 1-11, XP055292171, Middlebury, Vermont, USA Retrieved from the Internet: URL:http://citeseerx.ist.psu.edu/viewdoc/download;jsessionid=7F53DF531E2A97A8B33A6D4AAD2BB4BF?doi=10.1.1.58.4283&rep=rep1&type=pdf [retrieved on 2016-07-29] * page 1, paragraph 1 - paragraph 2 * * page 7, paragraph 2 * * page 8, paragraph 2 * * figure 1 * ----- | 1-15 | TECHNICAL FIELDS SEARCHED (IPC) G06F |

The present search report has been drawn up for all claims

| Place of search | Date of completion of the search | Examiner |
|---|---|---|
| The Hague | 18 August 2016 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SATHE K ; MAETZLER W ; LANG JD ; MOUNSEY RB ; FLECKENSTEIN C ; MARTIN HL ; SCHULTE C ; MUSTAFA S ; SYNOFZIK M ; VUKOVIC Z.** S100B is increased in Parkinson's disease and ablation protects against MPTP-induced toxicity through the RAGE and TNF-α pathway. *Brain,* November 2012, vol. 135, 3336-47, http://www.ncbi.nlm.nih.gov/pubmed/23169921

- **LANE R ; HE Y ; MORRIS C ; LEVERENZ JB ; EMRE M ; BALLARD C.** BuChE-K and APOE epsilon4 allele frequencies in Lewy body dementias, and influence of genotype and hyperhomocysteinemia on cognitive decline. *Movement Disorders,* 15 February 2009, vol. 24 (3), 392-400, http://www.ncbi.nlm.nih.gov/pubmed/19006190